# EUROPÄISCHE PATENTANMELDUNG

(11) **EP 3 324 600 A1**
(43) Veröffentlichungstag der Anmeldung: **23.05.2018**
(21) Anmeldenummer: 16200017.8
(22) Anmeldetag: 22.11.2016
(51) Int. Cl.: H04L 29/08

(54) **ECHTZEITÜBERWACHUNGS- UND ÜBERPRÜFUNGSMODUL FÜR SENSORKNOTEN**

(71) Anmelder: Airbus Defence and Space GmbH, 82024 Taufkirchen (DE)
(72) Erfinder: Kesuma, Hendra, 28277 Bremen (DE); Sebald, Johannes, 28199 Bremen (DE)
(74) Vertreter: Marschall, Stefan

(57) **Zusammenfassung**

Offenbart ist ein Sensorknotensystem zum Anzeigen von Informationen der in einem Raum übertragenen Daten, umfassend einen Sensorknoten zur Erfassung, Verarbeitung und Übertragung der Daten, wobei der Sensorknoten eine Sensorelektronikeinheit zur Erfassung und Verarbeitung der Daten und mindestens ein durch die Sensorelektronikeinheit angesteuertes optisches Sende-Empfangselement zum Senden und Empfang der Daten sowie ein Echtzeit-Überwachungs- und Überprüfungsmodul zum Erhalten von Dateninformationen aus dem Sende-Empfangselement aufweist, und ein Anzeigesystem zum Anzeigen der Daten, welches durch eine Verbindungsleitung an dem Sensorknoten angeschlossen sein kann, wobei der Sensorknoten ferner eine interne Schnittstelle zwischen dem Sende- Empfangselement und dem Echtzeit Überwachungs- und Überprüfungsmodul zur direkten Datenverbindung zum Anzeigesystem aufweist und wobei das Sende-Empfangselement zusammen mit dem Echtzeit-Überwachungs- und Überprüfungsmodul auf einem Chip eingebettet sein kann.

## Beschreibung

Die Erfindung betrifft ein Sensorknotensystem, welches ein Echtzeitüberwachungs- und Überprüfungsmodul für die korrekte Platzierung mehrerer Sensorknoten in einem Sensornetzwerk aufweist. Außerdem betrifft die Erfindung ein Sensornetzwerk, das ein Echtzeit Überwachungs- und Überprüfungsmodul verwendet.

Sensornetzwerke werden überall dort eingesetzt, wo Daten von Sensoren erfasst und übertragen werden. Über Sensornetze werden die verschiedenen von Sensoren erfassten physikalischen Größen, wie Temperatur oder Luftdruck, Drehmoment oder Helligkeit, Druck, Beschleunigung oder Vibration auch für die Steuerung eventueller Aktuatoren übertragen. Der wesentliche Unterschied von Sensornetzen gegenüber lokalen Netzen (LAN), WLANs und Mobilfunknetzen besteht darin, dass es sich bei den Sensor- und Aktuatordaten um relativ geringe Datenmengen handelt. Diese Daten können drahtgebunden oder drahtlos übertragen werden, wobei die Transportprotokolle für geringe Datenmengen optimiert werden. Drahtlose Sensornetzwerke sind einfach zu installieren, sie konfigurieren sich selbst und gehören zu den sogenannten Self Organized Networks (SON).

Die Flexibilität, Mobilität und der Wegfall von Verkabelungen machen den Einsatz von drahtlosen Sensornetzwerken in der Raumfahrt interessant. Durch verteilte Datenerfassung, dezentrale Anwendungssoftware, sowie vernetzte Kommunikation, werden völlig neue Möglichkeiten eröffnet.

Ein Sensorknoten besteht aus einem oder mehreren auch verschiedenen Sensoren (z.B. Lichtsensor, Bewegungssensor, Temperatursensor), um Daten zu erfassen, aus mindestens einer Sende- /Empfangseinheit, um die Daten zu übertragen sowie aus eine Statusanzeige, um den Status des Knoten zu visualisieren und somit überwachen zu können.

In einem Sensornetzwerk erfassen die Sensorknoten verschiedene Daten aus der Umgebung, welche zu einem Accesspoint übertragen und dort weitergeleitet werden. Hierbei wird jeder Sensorknoten je nach Lage des Accesspoints anders ausgerichtet.

Eine korrekte Platzierung des Sensorknotens - unter Berücksichtigung der Ausrichtung zum Accesspoint bzw. benachbarter Sensorknoten - ist ohne eine Echtzeit-Rückmeldung des Systems schwierig durchzuführen.

Falls Sensorknoten mit mehreren Sende- /Empfangseinheiten ausgestattet sind, gestaltet sich diese Aufgabe als noch komplizierter. Die Leistungsfähigkeit eines solchen Sensornetzwerkes hängt sehr von einer optimalen Ausrichtung der einzelnen Elemente ab.

Es ist daher die Aufgabe der Erfindung, ein Sensorknotensystem und ein Sensornetzwerk anzugeben, welches die obengenannten Probleme beseitigen bzw. zumindest verringern kann.

Diese Aufgabe wird durch ein Sensorknotensystem mit den Merkmalen des Anspruchs 1 und ein Sensornetzwerk mit den Merkmalen des Anspruchs 8 gelöst. Zweckmäßige Fortbildungen des Erfindungsgedankens sind Gegenstand der abhängigen Ansprüche.

Das erfindungsgemäße Sensorknotensystem ist zum Anzeigen von Informationen der in einem Raum übertragenen Daten geeignet. Das Sensorknotensystem weist mindestens einen Sensorknoten zur Erfassung, Verarbeitung und Übertragung der Daten, wobei der Sensorknoten eine Sensorelektronikeinheit zur Erfassung und Verarbeitung der Daten und mindestens ein durch die Sensorelektronikeinheit angesteuertes optisches Sende- Empfangselement zum Senden und Empfangen der Daten sowie ein Echtzeit Überwachungs- und Überprüfungsmodul zum Erhalten der Dateninformationen aus dem Sende- Empfangselement beinhaltet, auf.

Das Sensorknotensystem weist ferner ein Anzeigesystem zum Anzeigen der Daten, welches durch eine Verbindungsleitung an dem Sensorknoten angeschlossen ist, auf.

Im Besonderen, weist der Sensorknoten ferner eine interne Schnittstelle zwischen dem Sende- Empfangselement und dem Echtzeit Überwachungs- und Überprüfungsmodul zur direkten Datenverbindung zum Anzeigesystem auf, wobei das Sende- Empfangselement zusammen mit dem Echtzeit Überwachungs- und Überprüfungsmodul auf einem Chip eingebettet sein kann.

Das erfindungsgemäße Sensorknotensystem eignet sich besonders für die Raumfahrt, in der eine hohe Zuverlässigkeit der Sensorknoten sowie eine bestimmte Flexibilität der Komponenten erfordert ist und die Integration möglichst einfach erfolgen soll um Fehler zu vermeiden und Kosten zu sparen.

Somit erfolgt eine optimale Platzierung der Sensorknoten im Raum, da die wichtigsten Informationen der Sensorknoten in Echtzeit vor Ort angezeigt werden. Außerdem ist ein Monitoring- und Debugging-Methode einfach zu realisieren. Der Installateur kann zum Beispiel Informationen wie Sensorkennzeichen, Signalquelle, Kommandos, Status des Sende- Empfangselements, Messdaten und besonders wichtige Informationen über die Empfangsrichtung im Verhältnis zu anderen Sensorknoten - durch das Anzeigesystem - einfach und direkt erhalten.

Außerdem führt die Tatsache, dass das Sende- Empfangselement auf dem gleichen Chip zusammen mit dem Echtzeit Überwachungs- und Überprüfungsmodul integriert werden kann, zu einem kompakten und platzsparenden Sensorknoten.

In einer Ausführungsform der Erfindung entspricht das optische Sende-Empfangselement einem infrarot Sende- Empfangselement. Somit wird eine einfache Realisierung der elektromagnetischen Verträglichkeit erreicht, da die Daten über Infrarotsignal übertragen werden.

In einer weiteren Ausführungsform der Erfindung weist ferner das Sensorknotensystem eine Monitor-Schnittstelle (z.B. VGA) auf, welche zum direkten Anschluss zwischen dem Anzeigesystem und dem Sensorknoten verwendet wird. Dies ermöglicht es umfangreiche Informationen zeitgleich darstellen zu können, was mit einer vom Sensorknoten unterstützten seriellen Schnittstelle aus Geschwindigkeitsgründen nicht realisierbar wäre.

Des Weiteren ist hierbei - im Vergleich mit traditionellen Debugging Methode - die seriellen Schnittstelle verwenden, weniger Verkabelung erforderlich. In der Tat ist zu diesem Zweck auch kein Laptop mehr erforderlich.

In einer noch weiteren Ausführungsform der Erfindung, wird das Echtzeit Überwachungs- und Überprüfungsmodul durch einen externen Anschluss des Anzeigesystems elektrisch versorgt. Somit wird die eingebrachte Störung des Sensornetzwerkes stark minimiert und der Energieverbrauch des Sensorknotens nicht beeinflusst. Der Sensorknoten kann durch einen getrennten Energieerzeuger, wie z.B. eine oder mehrere Solarzellen, versorgt werden.

Um die erfassten Daten zu verarbeiten, weist die Sensorelektronikeinheit einen Mikrokontroller auf. Der Mikrokontroller kann zusätzlich einen Arbeitsspeicher beinhalten. Somit können die Daten vor Ort verarbeitet und nur die benötigten Informationen weitergeleitet werden.

In einer besonderen Ausführungsform der Erfindung weist das Anzeigesystem ein Bildschirmgerät auf. Somit können die Informationen auf einem üblichen Monitor angezeigt werden. Selbstverständlich kann das Anzeigesystem zusätzliche oder alternative Geräte bzw. Elemente aufweisen, welche für die Anzeige der Informationen geeignet sind.

In einer Ausführungsform der Erfindung weist der Sensorknoten einen oder mehrere Sensoren zur Erfassung von physikalischen Eigenschaften im Raum auf.

Somit können verschiedene physikalische Größen gleichzeitig gemessen bzw. erfasst und weiterhin die entsprechenden Daten verarbeitet werden. Eine solche Gestaltung, erlaubt eine komplexere Auswertung zum Beispiel der Raumeigenschaften, wie Temperatur, Feuchtigkeit oder Helligkeit, da verschiedene Dateninformationen gesammelt, kombiniert und ausgewertet werden können.

Das erfindungsgemäße Sensornetzwerk zur Erfassung, Verarbeitung, Übertragung und zum Anzeigen von Informationen der in einem Raum übertragenen Daten weist eine Mehrheit von im Raum verteilten Sensorknotensystemen, wie oben beschrieben, auf. Ferner weist das Netzwerk einen Accesspoint auf, welcher die vom optischen Sende-Empfangselement jedes Sensorknotensystems übertragenen Daten empfängt, verarbeitet und weiterleitet.

Im Besonderen werden die auf dem Anzeigesystem angezeigten Daten jedes Sensorknotensystems verwendet, um eine korrekte Platzierung der Sensorknoten im Raum zu ermöglichen.

Ein solches Sensornetzwerk ermöglicht daher gleichzeitig die Verwendung mehrerer Anzeigesysteme im Netzwerk zur Vereinfachung der Verifikation der korrekten Datenübertragung innerhalb des Sensornetzwerks.

Vorteile und Zweckmäßigkeit der Erfindung ergeben sich im Übrigen aus der nachfolgenden Figurenbeschreibung ausgewählter Ausführungsbeispiele. Von diesen zeigen:
- Fig.1: eine schematische Darstellung eines Sensorknotensystems gemäß einer Ausführungsform der Erfindung, und
- Fig.2: eine schematische Darstellung eines Sensornetzwerks gemäß einer Ausführungsform der Erfindung.

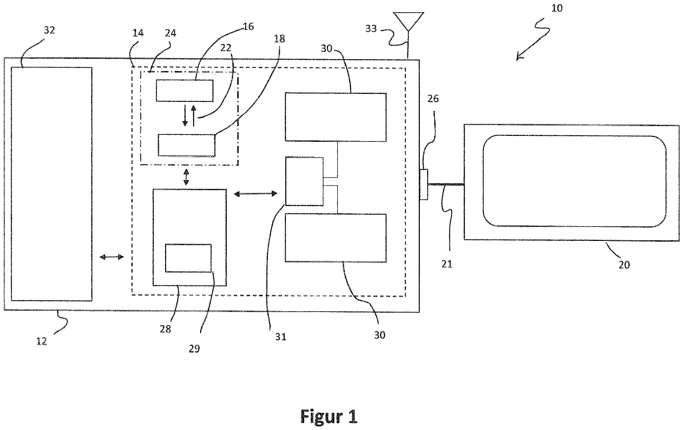

Die Figur 1 beschreibt eine schematische Darstellung eines Sensorknotensystems 10. Das System 10 weist einen Sensorknoten 12 und ein Anzeigesystem bzw. einen Bildschirm 20 auf, welches mit dem Sensorknoten 12 über eine Verkabelung 21 verbunden ist. Im Besonderen ist der Bildschirm 20 an den Sensorknoten 12 durch eine Monitor (z.B. VGA) Schnittstelle 26 angeschlossen.

Der Sensorknoten 12 weist einen Chip 24 auf, auf dem ein optisches Sende- Empfangselement 16 zum Senden und Empfang der Daten sowie ein Echtzeit Überwachungs- und Überprüfungsmodul 18 zum Erhalten Dateninformationen aus dem Sende- Empfangselement 16 eingebettet sind.

Des Weiteren weist der Sensorknoten 12 eine elektrische Energiequelle bzw. ein Photovoltaikelement 32 auf, das mit einer Lichtenergie einer Lichtquelle versorgt wird. Das Photovoltaikelement wandelt die von der Lichtquelle verbreitete Lichtenergie in elektrische Energie zur Versorgung der elektrischen Komponenten der Sensorknoten 12 um.

Außerdem sind bestimmte Sensoren 30 vorhanden, die physikalische Parameter des Raums messen.

Der Sensorknoten 12 weist ferner einen einer Sensorelektronikeinheit 14 zugeordneten Mikrokontroller 28 zur Datenverarbeitung und Funktionalitätsüberwachung der Komponenten des Sensorknotens 12 auf. Der Mikrokontroller 28 steht mit einem Arbeitsspeicher 29, der Solarzelle 32, dem optischen Sende- Empfangselement 16, dem Echtzeit Überwachungs- und Überprüfungsmodul 18 und mit (beispielhaft) zwei Sensoren 30 über ein A/D Umsetzer (ADC) 31 in Verbindung. Der Arbeitsspeicher 29 ist ein On-Chip-Speicher des Mikrokontrollers 28 oder Flash-Speicher. Im Besonderen kann der Arbeitsspeicher 29 einem Programmspeicher zur Programmierung des Sensorknotens 12 entsprechen. Die Solarzelle 32 dient hierbei als Stromquelle für die Komponenten des Sensorknotens 12. Die Sensoren 30 erfassen die physikalischen Daten der zu überwachenden Parameter, wobei die Sensoren 30 passiv oder aktiv sein können. Ein von den Sensoren 30 erzeugtes Analogsignal wird durch einen A/D Umsetzer 31 digitalisiert und zum Mikrokontroller 28 zur Weiterverarbeitung gesendet. Digitale Sensoren werden über eine serielle Schnittstelle mit dem Mikrokontroller verbunden.

Die Daten werden durch eine Antenne 33 gesendet bzw. empfangen.

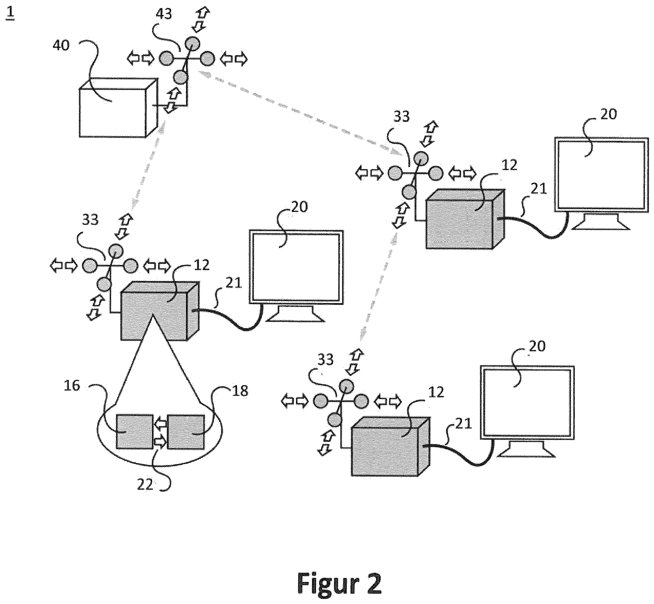

Die Figur 2 beschreibt eine Darstellung eines Sensornetzwerks 1 zur Erfassung, Verarbeitung, Übertragung und zum Anzeigen von Informationen der in einem Raum übertragenen Daten. Das in Figur 2 gezeigte Sensornetzwerk 1 weist drei Sensorknoten 12 auf, die im Raum verteilt sind.

Durch die Verwendung bestimmter Sensoren (in der Figur nicht aufgezeigt), werden vom Sensorkonten 12 physikalische Parameter gemessen und Daten erfasst bzw. verarbeitet. Jeder Sensorknoten 12 weist ein optisches Sende- Empfangselement 16 und ein Überwachungs-und Überprüfungsmodul 18 auf. Diese werden auf einem einzigen Chip 24 eingebettet. Die interne Schnittstelle 22 auf dem Chip 24 sorgt für eine direkte und schnelle Datenverbindung zum Bildschirm 20.

Ein Accesspoint 40 kommuniziert durch eine entsprechende Antenne 43 mit den Sensorknoten 12 über die entsprechenden Antennen 33 der Sensorknoten 12. Die wichtigen Informationen der Sensorknoten 12 werden durch die Datenleitungen 21 vom Überwachungs- und Überprüfungsmodul 18 jedes Sensorknotens 12 an die entsprechenden Bildschirme 20 weitergeleitet und dort angezeigt.

Aus der Figur 2 ist zu entnehmen, dass die Datenübertragung sowie zwischen dem Accesspoint 40 und den einzelnen Sensorknoten 12 als auch zwischen zwei Sensorknoten 12 erfolgt.

Die Ausführung der Erfindung ist nicht auf die oben beschriebenen Beispiele und hervorgehobenen Aspekte beschränkt, sondern ebenso in einer Vielzahl von Abwandlungen möglich, die im Rahmen fachgemäßen Handelns liegen.

Offenbart ist ein Sensorknotensystem 10 zum Anzeigen von Informationen der in einem Raum übertragenen Daten, umfassend einen Sensorknoten 12 zur Erfassung, Verarbeitung und Übertragung der Daten, wobei der Sensorknoten 12 eine Sensorelektronikeinheit 14 zur Erfassung und Verarbeitung der Daten und mindestens ein durch die Sensorelektronikeinheit 14 angesteuertes optisches Sende-Empfangselement 16 zum Senden und Empfang der Daten sowie ein Echtzeit Überwachungs- und Überprüfungsmodul 18 zum Erhalten Dateninformationen aus dem Sende- Empfangselement 16 aufweist, und ein Anzeigesystem 20 zum Anzeigen der Daten, welches durch eine Verbindungsleitung 21 an dem Sensorknoten 12 angeschlossen ist. Im Besonderen weist der Sensorknoten 12 ferner eine interne Schnittstelle 22 zwischen dem Sende- Empfangselement 16 und dem Echtzeit Überwachungs- und Überprüfungsmodul 18 zur direkten Datenverbindung zum Anzeigesystem 20 auf, wobei das Sende- Empfangselement 16 zusammen mit dem Echtzeit Überwachungs- und Überprüfungsmodul 18 auf einem Chip 24 eingebettet sein kann.

Ferner wird ein Sensornetzwerk gezeigt, welches eine Mehrheit von wie oben beschrieben Sensorknotensystemen 10 aufweist, die mit einem Accesspoint 40 kommunizieren.

Offenbart ist ein Sensorknotensystem zum Anzeigen von Informationen der in einem Raum übertragenen Daten, umfassend einen Sensorknoten zur Erfassung, Verarbeitung und Übertragung der Daten, wobei der Sensorknoten eine Sensorelektronikeinheit zur Erfassung und Verarbeitung der Daten und mindestens ein durch die Sensorelektronikeinheit angesteuertes optisches Sende- Empfangselement zum Senden und Empfang der Daten sowie ein Echtzeit Überwachungs- und Überprüfungsmodul zum Erhalten von Dateninformationen aus dem Sende-Empfangselement aufweist, und ein Anzeigesystem zum Anzeigen der Daten, welches durch eine Verbindungsleitung an dem Sensorknoten angeschlossen sein kann, wobei der Sensorknoten ferner eine interne Schnittstelle zwischen dem Sende- Empfangselement und dem Echtzeit Überwachungs- und Überprüfungsmodul zur direkten Datenverbindung zum Anzeigesystem aufweist und wobei das Sende- Empfangselement zusammen mit dem Echtzeit Überwachungs- und Überprüfungsmodul auf einem Chip eingebettet sein kann.

### Bezugszeichenliste

- 1: Sensornetzwerk
- 10: Sensorknotensystem
- 12: Sensorknoten
- 14: Sensorelektronikeinheit
- 16: Optisches Sende- Empfängerelement
- 18: Echtzeit Überwachungs- und Überprüfungsmodul
- 20: Anzeigesystem
- 21: Verkabelung
- 22: Interne Schnittstelle
- 24: Chip
- 26: VGA (externe) Schnittstelle
- 28: Mikrokontroller
- 29: Speicher
- 30: Sensor
- 31: A/D Umsetzer
- 32: Energieerzeuger (Photovoltaik-Element)
- 33: Antenne (Sensorknoten)
- 40: Accesspoint
- 43: Antenne (Accesspoint)

## Patentansprüche

1. Sensorknotensystem (10) zum Anzeigen von Informationen der in einem Raum übertragenen Daten, umfassend:
• einen Sensorknoten (12) zur Erfassung, Verarbeitung und Übertragung der Daten, wobei der Sensorknoten (12) eine Sensorelektronikeinheit (14) zur Erfassung und Verarbeitung der Daten und mindestens ein durch die Sensorelektronikeinheit (14) angesteuertes optisches Sende- Empfangselement (16) zum Senden und Empfang der Daten sowie ein Echtzeit Überwachungs- und Überprüfungsmodul (18) zum Erhalten der Dateninformationen aus dem Sende- Empfangselement (16) aufweist, und
• ein Anzeigesystem (20) zum Anzeigen der Daten, welches durch eine Verbindungsleitung (21) an dem Sensorknoten (12) angeschlossen ist,
• wobei der Sensorknoten (12) ferner eine interne Schnittstelle (22) zwischen dem Sende- Empfangselement (16) und dem Echtzeit Überwachungs- und Überprüfungsmodul (18) zur direkten Datenverbindung zum Anzeigesystem (20) aufweist, und wobei das Sende- Empfangselement (16) zusammen mit dem Echtzeit Überwachungs- und Überprüfungsmodul (18) auf einem Chip (24) eingebettet ist.

2. Sensorknotensystem (10) nach Anspruch 1, wobei das optische Sende-Empfangselement (12) einem infrarot Sende- Empfangselement entspricht.

3. Sensorknotensystem (10) nach einem der vorhergehenden Ansprüche, ferner umfassend eine Monitor-Schnittstelle (26) zum direkten Anschluss zwischen dem Anzeigesystem (20) und dem Sensorknoten (12).

4. Sensorknotensystem (10) nach einem der vorhergehenden Ansprüche, wobei das Echtzeit Überwachungs- und Überprüfungsmodul (18) durch einen externen Anschluss des Anzeigesystems (20) elektrisch versorgt wird.

5. Sensorknotensystem (10) nach einem der vorhergehenden Ansprüche, wobei die Sensorelektronikeinheit (14) einen Mikrocontroller (28) aufweist.

6. Sensorknotensystem (10) nach einem der vorhergehenden Ansprüche, wobei das Anzeigesystem (20) ein Bildschirmgerät aufweist.

7. Sensorknotensystem (10) nach einem der vorhergehenden Ansprüche, wobei der Sensorknoten (12) einen oder mehrere Sensoren (30) zur Erfassung von physikalischen Eigenschaften im Raum aufweist.

8. Sensornetzwerk (1) zur Erfassung, Verarbeitung, Übertragung und zum Anzeigen von Informationen der in einem Raum übertragenen Daten, umfassend:
• eine Mehrheit von im Raum verteilten Sensorknotensystemen (10) nach einem der vorhergehenden Ansprüche, und
• einen Accesspoint (40), welcher die vom optischen Sende-Empfangselement (16) jedes Sensorknotensystems (10) übertragenen Daten verarbeitet und weiterleitet,
• wobei die auf dem Anzeigesystem (20) angezeigten Daten jedes Sensorknotensystems (10) verwendet werden, um eine korrekte Platzierung der Sensorknoten (12) im Raum zu ermöglichen.
